# EUROPEAN PATENT APPLICATION

(11) **EP 1 416 701 A1**
(43) Date of publication of application: **06.05.2004**
(21) Application number: 02292731.3
(22) Date of filing: 31.10.2002
(51) Int. Cl.: H04M 1/57, H04M 1/663

(54) **Communication device and communication system**

(71) Applicant: MOTOROLA, INC., Schaumburg, IL 60196 (US)
(72) Inventor: Abdesselem, Ouelid, Toulouse 31000 (FR); Fouilland, Pascal, Tournefeuille 31170 (FR); Garani, Pradeep, Bosco, Toulouse Haute-Garonne 31000 (FR)
(74) Representative: Litchfield, Laura Marie

(57) **Abstract**

The present invention relates to a communication device that is adapted to send and receive personalized parameters representing caller-defined characteristic information about a call. The present invention also relates to a communication network apparatus which is adapted to read the personalized parameters and to derive billing information for the call from the personalized parameters. The present invention also relates to a communication system.

The invention enables caller-defined information to be transferred between an originating party and a receiving party. The caller-defined information may be transferred in the call set up message, or during or at the end of a call. The caller-defined information determines how the call is presented to the called user.

## Description

The present invention relates to a communication device, a communication system apparatus and to a communication system in which personalized services can be provided.

Increasingly users of communication devices are seeking to enhance the basic operation of a communication device. Caller id display, in which the calling telephone number is displayed on a display of a communication device prior to the call being answered, has been in common use in both wire-line and wireless communication systems for some time.

Additionally, it is known for a communication device to display a caller's name instead of the telephone number if the communication device recognizes the caller's number, for example because the caller's name and number are stored together in the communication device's memory. Thus, on receipt of an incoming call, the communication device might display the caller id as "Mum" instead of the UK telephone number 01234 567 898.

More recently, it has been possible for a user to set up an association between a caller id and a vibrate/ring tone and/or a specific screen colour or picture. Thus a user may generate local rules stored in their communication device for determining how the communication device should respond to an incoming call, based on the caller id of the caller. When a call request is received, the communication device checks to see whether any such associations or rules have been set up by the user of the communication device. If no such rules or associations have been set up, the communication device merely displays the caller id ie. the number of the calling party.

Such personalization is considered valuable to the user and the enablement of this feature can provide increased revenues to a communication system operator. However, the level of personalization available to users to date does not adequately satisfy users' desire for personalized communication.

The present invention seeks to increase the ability of users to personalize their use of communication devices.

According to a first aspect of the invention there is provided a communication device adapted to enable a user of the communication device to determine characteristic information of a call and to send a message connected with the call containing at least one personalized parameter representing said characteristic information of the call.

According to a second aspect of the invention, there is provided a communication device adapted to read at least one personalized parameter representing caller-determined characteristic information of a call from a message received in connection with the call and to use the personalized parameter or the characteristic information in determining presentation of the call to the user.

According to a third aspect of the invention there is provided a communication system apparatus adapted to read at least one personalized parameter representing caller-determined characteristic information of call from a message connected with the call that is processed by the communication system apparatus and to use the personalized parameter or the characteristic information to determine billing of the call.

According to a fourth aspect of the invention there is provided a communication system comprising a communication network and at least a first and a second communication device in which at least one personalized parameter representing caller-determined characteristic information of a call is generated in the first communication device, is passed to and transmitted through the communication network, and passed to the second communication device.

For a better understanding of the present invention, and to show how it may be brought into effect, reference will now be made, by way of example, to the accompanying drawings, in which:
Figure 1 is a flow chart illustrating the operation of an originating communication device and a receiving communication device during the transfer of characteristic information relating to a call from an originating device to the receiving device in accordance with one aspect of the present invention;
Figure 2 is a flow chart illustrating the operation of a communication system apparatus in accordance with one aspect of the present invention;
Figure 3a) is a first exemplary arrangement of the user field in accordance with an embodiment of the invention;

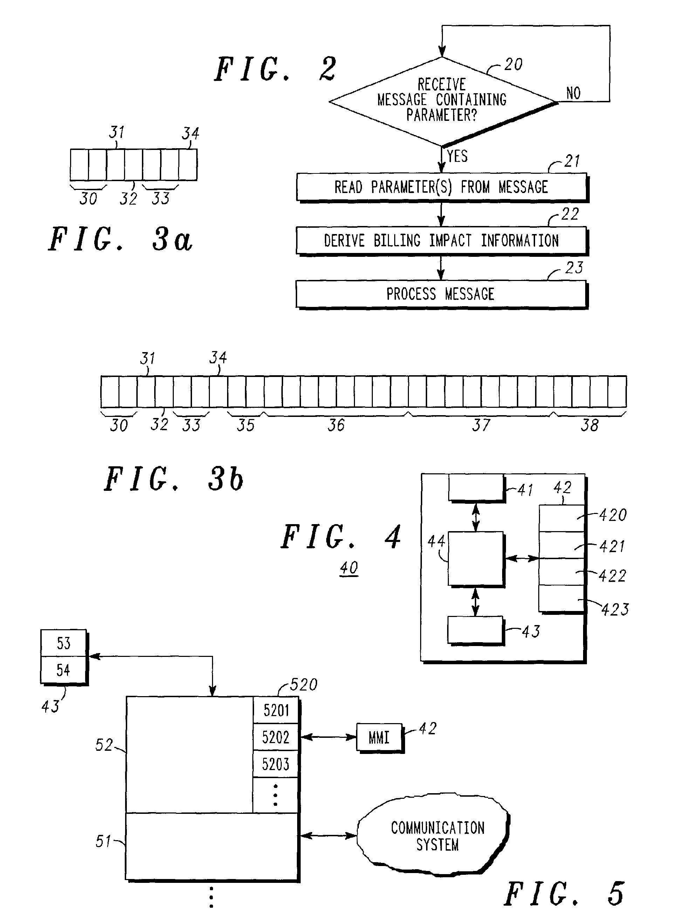

Figure 3 b) is a second exemplary arrangement of the user field in accordance with an embodiment of the invention;
Figure 4 shows a schematic diagram of the hardware configuration of a communication device in accordance with an exemplary embodiment of the present invention;
Figure 5 shows a schematic diagram of the software element configuration of a communication device in accordance with an exemplary embodiment of the invention;

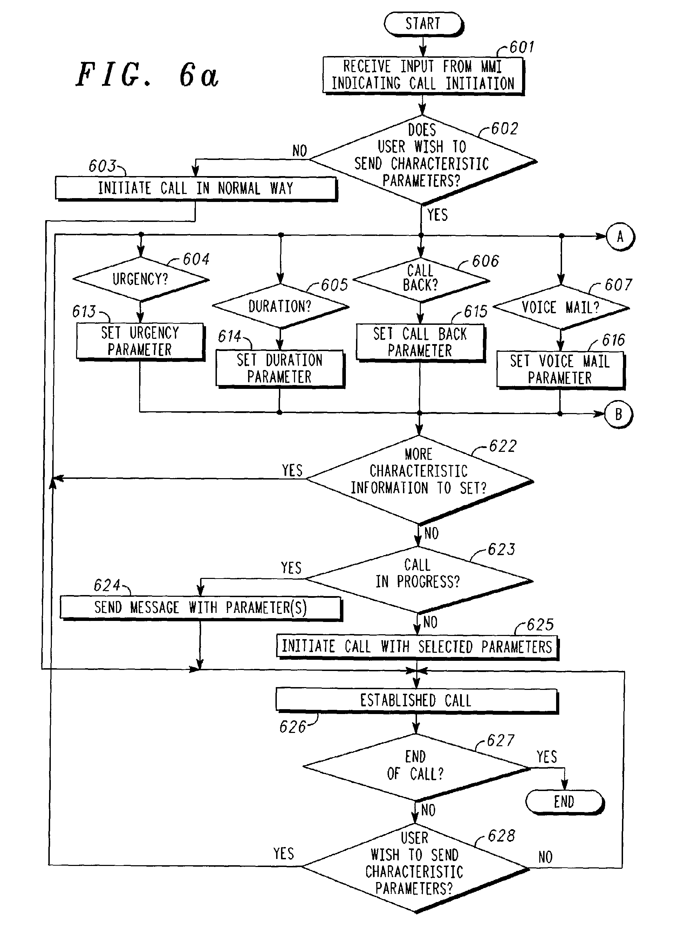

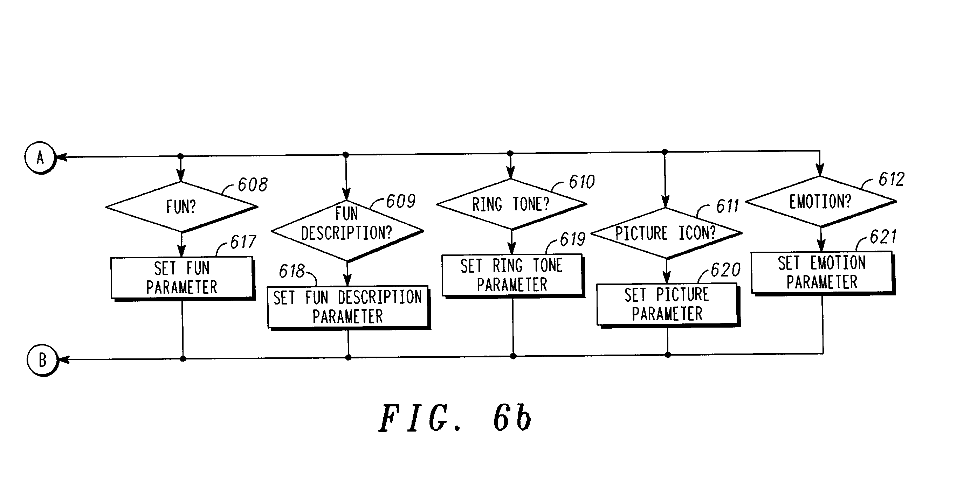

Figures 6a and 6b illustrate an exemplary operation of the communication device in accordance with an embodiment of the present invention when sending personalized parameters in accordance with the invention;

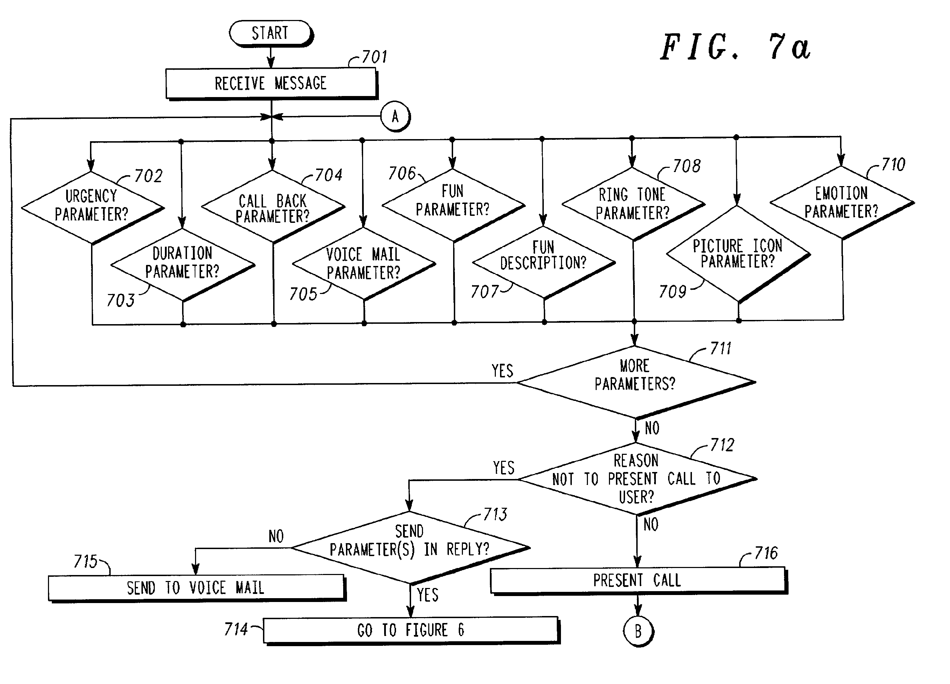

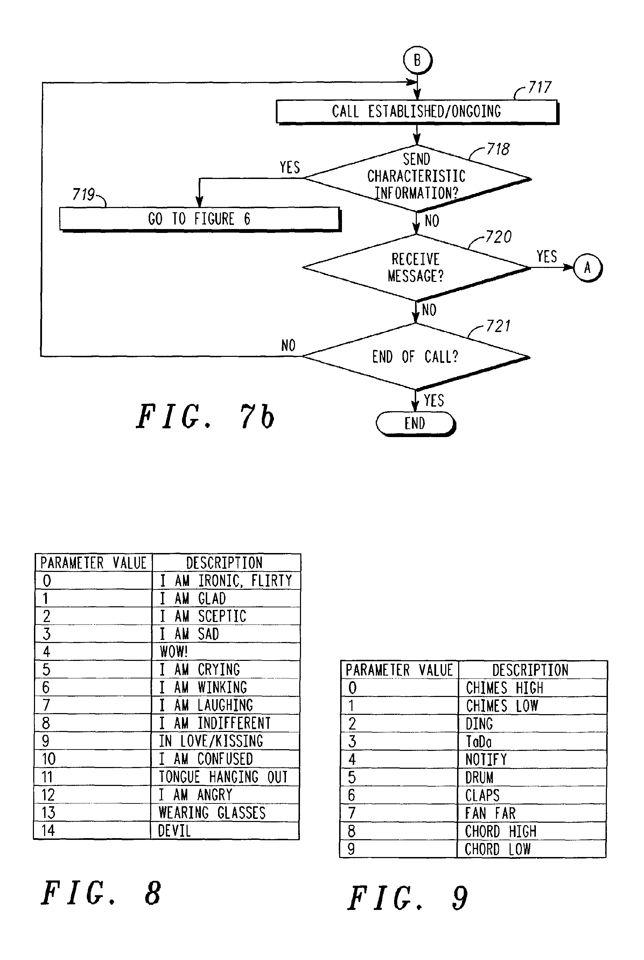

Figures 7a and 7b illustrate an exemplary operation of the communication device in accordance with an embodiment of the present invention when receiving personalized parameters in accordance with the invention;
Figure 8 shows exemplary emotions which can be used in accordance with a preferred embodiment of the invention;
Figure 9 shows exemplary sounds which can be used in accordance with an embodiment of the invention.

In accordance with the present invention a communication device user is able to define characteristic information of an individual call and to send that characteristic information to the other party in the call. User-defined characteristic information of the call can include:
- Urgency:: my spouse is calling - do I need to answer or could the call wait if I am busy?
- Emergency:: the call relates to an emergency situation
- Call back:: the inititator of the call expects the receiver to call back or not
- Voice mail:: the caller expects to leave a voice mail message if the call is not answered; the caller expects to leave a voice mail in any case; the caller does not expect to leave a voice mail in any case;
- Duration:: is the call expected to be short?
- Fun/emotion:: the caller may be calling to share happy news
- Ring tone:: the caller may define a ring tone to be played
- Pictures:: the caller may define a picture to be displayed
- Emotion:: the caller may define an emotion associated with the call
- Sounds:: the caller may define sounds to be displayed
- Attempts:: the number of previous unsuccessful attempts to initiate the call

However, the invention is not limited to the above characteristic information.

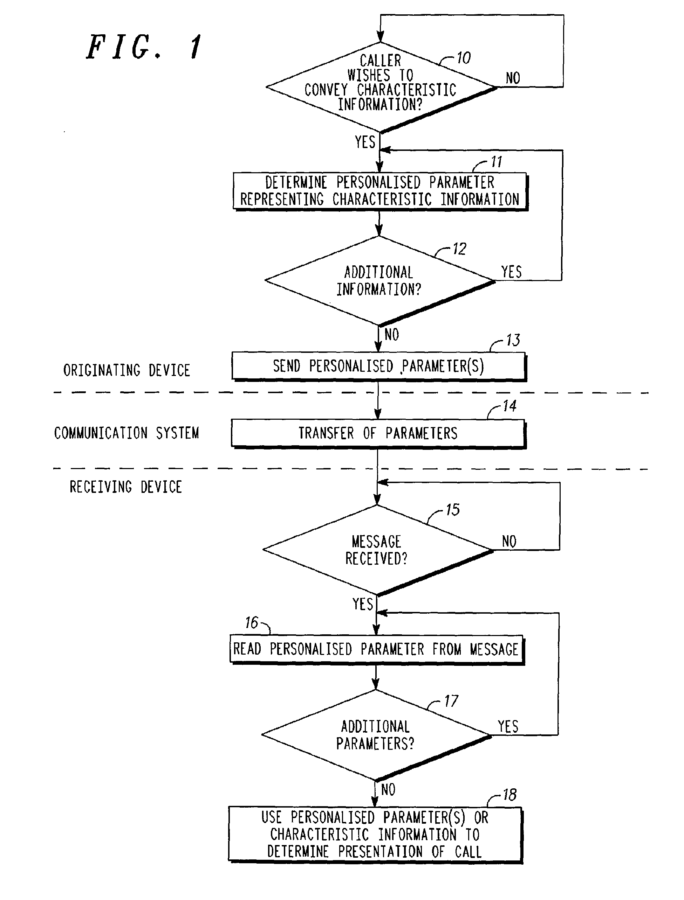

Figure 1 is a flow chart illustrating the operation of an originating communication device and a receiving communication device during the transfer of characteristic information relating to a call from an originating device to the receiving device in accordance with one aspect of the present invention.

It should be noted that the invention is applicable both to information to be conveyed on initiation of a call and also to information to be conveyed during or at the end of a call. Thus it is clear that the term "caller" as used herein with reference to the caller-determined characteristics of a call refers to the party wishing to convey information relating to the call, and not necessarily to the initiator of the call.

Firstly, as shown in step 10 of Figure 1, initially an originating communication device is waiting for an indication from the user of the communication device that the user wishes to convey characteristic information relating to a call.

Preferably, access to this feature is provided by a menu option. Alternatively, access to this feature may be provided by way of a predefined or a user-definable key or in other ways which will be clear to a person skilled in the art. In some circumstances, the indication may be automatically assumed, as in the case of the emergency call described below, or the communication device may prompt the user to send characteristic information.

Once the originating communication device receives an indication that the user wishes to convey characteristic information relating to the call, in step 10, the originating communication device determines the personalised parameter representing the characteristic information, in step 11. The user may wish to convey multiple items of characteristic information simultaneously, and the originating communication device determines the parameters representing all such characteristic information, as indicated by the "yes" outcome to step 12.

Once the parameter or all the parameters have been determined, the parameter(s) representing characteristic information are sent by the originating communication device in a message relating to the call as shown in step 13.

Again, it should be noted that the message relating to the call may be an initial call request message or other message sent during call set up, or the parameters may be sent as part of any message relating to an existing call that is sent.

Preferably the parameters are included in standard messages transferred between the communication devices, in order to minimize bandwidth and processing impact on the communication devices and/or the communication system. However, it would be possible to send the parameters in a new dedicated personalized parameter message.

The personalised parameters are intended for the use of the receiving device. They are transferred through the communication system, as shown in box 14, and a message containing the caller parameters is sent to the receiving communication device. This transfer is preferably transparent to the communication system. However, as discussed later, a communication apparatus of a communication system may read parameter information for example for billing purposes or to connect the call directly to voicemail.

The present invention is applicable to fixed wire-line communication systems and also to wireless communication systems. Therefore the communication device of the present invention may be adapted for operation in a fixed telephone system, for example, or more preferably may be a selective call receiver in a wireless communication system. As a result the protocols used for the transfer of information between the originating communication device and the communication system, and between the communication system and the receiving communication device will not be described in any detail, but will be known by a person skilled in the relevant art.

The receiving device receives the message containing the personalised parameters, as shown in step 15, and reads the personalized parameters from the message as shown in step 16. Since more than one personalised parameter may be included in the message, the receiving communication device checks for additional parameters, as illustrated by step 17. Finally, once all parameters have been obtained, the communication device uses the parameter or parameters, or characteristic information derived therefrom, to determine presentation of the call to the user of the receiving communication device.

The parameters may be used by the receiving communication device to determine how the call is presented to the user of the receiving communication device. Thus, for example, ring tones or volumes, displayed icons, display colour, keypad backlight, pictures, vibration, emotion animations or other alerts may be configured based on the received parameter. As indicated earlier, the presentation of the call can occur during a call or at the end of a call as well as during the initial set up of the call.

Preferably the received message is a call initiation request, as standardized for the communication system in which the communication device operates. Most preferably personalized parameters are included in a SETUP message, for example as described in section 9.3.23 of 3GPP 24.008 specification or its evolutions for a GSM/EDGE/UMTS communication device.

The parameters may be used by the receiving communication device to determine whether or not to present an incoming call to the user. Thus, for example if the battery of the receiving communication device was low, only short or urgent calls from a subset of callers might be presented, while all other calls were directed to voice mail.

Advantageously, the caller id is also taken into account in addition to the received personalized parameters, in determining the presentation of the call to the user of the receiving communication device. For example, when in a meeting, the user of the receiving device may choose to accept calls only from a sub-set of people, such as only short calls from their spouse and children or only urgent calls from particular work colleagues who might be calling with information relevant to the meeting.

Most preferably, the caller id may be taken into account in order to determine whether to allow more advanced characteristic information for the call to be used. For example, a communication device may be configured to allow only a user's family and close friends to define a sub-set of characteristic information, such as characteristic information affecting the communication device operation, for example ring tones/display screen colours or emotion display, while other people can only define display characteristics such as "short call".

Thus it can be seen that the present invention enables one party, the originator, in an existing or in a future call to send personalized characteristic information relating to the call to the other party, the receiver. This characteristic information may be altered on a call by call basis and may enable the originator to affect the presentation of the call to the receiver by the communication device of the receiver.

Preferably, the user of a communication device can configure the response of the communication device eg the melody/ring tone, pictures/animations/icons, vibration LED keypad backlight etc to different received personalized parameters. In this way the response of the communication device to the received parameters depends both on the received parameters, defined by the parameter originator (caller) and on the parameters receiver. The configuration of the response may also advantageously also depend on the caller id.

Most advantageously, when the received parameter is the emotion parameter is based on the Extended Message Service (EMS) emotions defined in the European Telecommunications Standards Institute Third Generation Partnership Project (ETSI 3GPP) specification 23.040. These emotions are standardized for messaging services and when received by a device produce an animation which is manufacturer-specific, to illustrate the emotion.

The reuse of the EMS defined emotions in wireless communication devices in accordance with the present invention is highly desirable. Since the relevant software to process the EMS defined emotions is already present in wireless communication devices operating to the 3GPP specification, re-use of the standardized emotions is simple.

Most preferably, when the received parameter is an emotion parameter the receiving communication device may be configured to respond in a specified way instead of or in addition to the manufacturer-implemented animation for that emotion. This configuration may be a manufacturer- or operator- implemented configuration or more preferably a user-implemented configuration. For example, in response to receipt of emotion parameter 7 "I am laughing" the communication device might be configured by the user to vibrate, or in response to receipt of emotion parameter 12 "I am laughing" the keypad backlight might flash and the screen colour be changed to red.

Advantageously, the received parameters may also include an attempts parameter that indicates the number of previously unsuccessful attempts to initiate the call.

The present invention enables the communication system operator to maximize revenue by providing personalized supplementary services that are attractive to users. As indicated above, the personalized parameters relating to a call are passed across the communication system associated with a message relating to the call, or more accurately with a series of messages depending on the call protocols used in the communication system. This message is, or series of messages are, handled by a number of communication system apparatus in the communication system for routing, switching etc.

In accordance with an embodiment of the invention, when the message is received at one of these communication system apparatus, as shown in box 20 of Figure 2, the communication system apparatus reads the parameter(s) from the message, step 21, and determines billing impact information therefrom, step 22. Thereafter, the communication system apparatus processes the received message in the usual manner, step 23.

In an exemplary embodiment of the invention, the communication system apparatus is a Mobile Switching Center (MSC) in a GSM/GPRS/EDGE system. However, it will be appreciated that the invention is also applicable to UMTS or other 3G systems, or more generally to existing and future communication systems both wire-line communication systems and also wireless communication systems.

Thus it can be seen that the communication system operator can implement the invention very easily. In particular, minimal additional bandwidth is necessary to implement the invention as the personalised parameter information may be sent in an already existing message that must be sent/received by the communication devices and processed by the communication system in any event. In addition, the changes to the communication system apparatus software required to implement the invention are minimal if the billing paradigms are kept similar to existing supplementary services paradigms. Thus the ratio of cost of implementation vs revenue delivered is highly favorable.

Preferably, the message relating to the call contains a personalized user field containing the parameters. Two exemplary arrangements of the user field in accordance with embodiments of the invention are shown in Figure 3a) and 3 b).

The user field shown in Figure 3a) contains basic personalized parameters 30-33:
Parameter 30 comprises two bits and indicates the urgency or emergency status of the call, for example emergency/urgent/normal/postponable;
Parameter 31 comprises one bit and indicates the expected duration of the call: for example less than 30 secs/greater than 30 secs;
Parameter 32 comprises one bit and indicates whether an initiator of a call would like the receiver to call back or not, if the call cannot be taken initially;
Parameter 33 comprises two bits and indicates whether the caller expects to leave a voicemail message if the call is not answered; the caller expects to leave a voicemail in any case; the caller does not expect to leave a voicemail in any case.
Parameter 34 comprises one bit and indicates fun sent/no fun sent.

A personalized user field containing additional personalized parameters is shown in Figure 3b). The user field shown in Figure 3b) contains parameters 30-33 and additional parameters 35-38. Parameters 30-34 are the same as described above with reference to Figure 3a) and so will not be described further.

Parameter 35 comprises 2 bits and represents a fun description: for example ring tones/pictures/both/other possibilities for future use.

Parameter 36 comprises 8 bits and identifies predefined ring tones, for example the melodies defined in a standard relevant to the communication system in which the communication device operates.

Parameter 37 comprises 8 bits and identifies predefined pictures, for example the pictures/icons defined in a standard relevant to the communication system in which the communication device operates.

Parameter 38 comprises 4 bits and identifies predefined emotions. Preferably, the emotions identified by this parameter are the emotions shown in Figure 8, which are the same as the Extended Message Service (EMS) emotions defined in ETSI 3GPP specification 23.040. This parameter may advantageously comprise additional bits to identify other emotions, whether standardized for the communication system or proprietary.

Clearly, although preferable, it is not necessary that the defined emotions shown are associated with the indicated parameter values. In particular, it is clear that the defined emotions may be associated with, for example, parameter values 16-30 of an 8-bit field, with the other values being reserved for proprietary emotions implementations.

A further parameter (not shown) may be included identifying a specific sound to be made by the receiving communication device. For example a 4bit sound parameter could identify one of the nine sounds as shown in Figure 9, which are the same as the Extended Message Service (EMS) sounds defined in the ETSI 3GPP specification 23.040.

A further advantageous parameter (not shown) may be included relating to the number of previous unsuccessful attempts to initiate the call. For example, a two bit attempts parameter could indicate: unknown or no unsuccessful previous attempt; 1 unsuccessful previous attempt; 2 unsuccessful previous attempts; 3 unsuccessful previous attempts.

Clearly, the above descriptions of parameters in the user fields, and the number of bits required for each parameter, are intended to be merely exemplary, and a number of different arrangements are possible in accordance with embodiments of the present invention.

A more detailed explanation of an embodiment of the invention will now be given with reference to the accompanying drawings. A skilled person will understand that the inventive functionality of the communication device can be provided by way of a number of different hardware or software configurations, and the following description is intended to be exemplary only.

Figure 4 shows a schematic diagram of the hardware configuration of a communication device 40 in accordance with an embodiment of the present invention. Only hardware relevant to the operation of the invention is shown, and the person skilled in the art will appreciate that further hardware would be present in an operational communication device.

The communication device 40 has communication means 41 for communicating with a communication system. In a wireless communication system, the communication means 41 may comprise an antenna, modulator/demodulator, interleaver/deinterleaver and codecs etc as will be apparent to a skilled person. In a wireline system the communication means 41 may comprise modulator/demodulator, interleaver/deinterleaver and codecs etc as will be apparent to a skilled person. The communication means 41 hardware is adapted to enable the sending of signals to and the receipt of signals from the communication system. As such, the communication means 41 hardware configuration will be apparent to a skilled person and will not be discussed further herein.

The communication device 40 also has Man Machine Interface (MMI) hardware 42 to enable communication with the user of the communication device 40. In the exemplary embodiment shown in Figure 4, the Man Machine Interface (MMI) hardware 42 comprises keys 420 to receive input from the user of the communication device 40; a display 421 for displaying information to the user of the communication device 40; a speaker 422 for providing audible information, including ring tones, to the user of the communication device 40; and a microphone 423 for receiving audible information from the user of the communication device 40. The MMI hardware 42 may include other hardware not shown, for example a touch sensitive screen.

The communication device 40 also has a memory 43 containing inter alia ringtones and picture or icon information as will be explained hereafter. Memory 43, or another memory, may also store emotion animation information (not shown). The memory 43 may be a separate memory device, but is more likely provided as a part of a larger memory device (not shown).

The communication device 40 also has a controller/processor 44, which is coupled to each of the communication means 41, the Man Machine Interface (MMI) 42 and the memory 43. The controller/processor 44 operates as described hereafter to control the operation of the communication device 40 in accordance with the invention.

Figure 5 is a schematic diagram explaining the software elements used in an exemplary embodiment of the invention. Again, the skilled person will recognize that other software elements will also be present in the communication device 40. Since these other software elements are familiar to the person skilled in the art and are not relevant to the invention they will not be described further.

Controller/processor software 50 is software run by the controller/processor 44 shown in Figure 4. The controller/processor software 50 has a call control layer 51 and an applications layer 52 as well as other layers not illustrated for the sake of clarity, but which will be known to a skilled person.

The applications layer software 52 has a MMI software element 520 providing an interface with the MMI hardware 42. Thus the MMI software element 520 may have sub-elements providing an interface to specific hardware elements, for example a key pad interface 5201; a display interface 5202; a ringtone interface 5203; and other interfaces as required.

During initiation of a call and while a call is established the call control layer 51 communicates with the call control layer in the communication system via the lower layers shown in dotted lines in Figure 5, as will be known by a skilled person. The applications layer 52 interfaces with the user via the MMI software element 520 and the MMI hardware 42 and runs various applications as is known by a skilled person.

The applications layer 52 also interfaces with memory 43 containing ringtone information 53 and picture information 54. Preferably, the ringtone information 53 and the picture information 54 include those set out in the 3GPP 23.040 standard document, or otherwise as standardized for the communication system. However, proprietary ringtones and pictures may also be used.

An exemplary operation of the communication device in accordance with an embodiment of the present invention will now be explained with reference to Figures 6a, 6b 7a and 7b. In this embodiment, it is assumed that a user field as shown in Figure 3b) is being used to transfer the personalised parameters between communication devices.

Initially, the communication device application layer 52 receives an indication via the MMI software element 520 that the user wishes to make a call, step 601. This may be via direct key input of the number to be called to the keypad, or recall of a stored number, or by voice recognition, for example.

The application layer 52 then determines whether the user wishes to send characteristic parameters, step 602. This can be achieved by way of a menu option made available to the user on the display 421 by the application layer 52 via the display interface 5202 of the MMI software element 520. If the user indicates that no characteristic parameters are required, for example via the key pad interface 5201 of the MMI software element 520, the call is initiated in the conventional way, step 603.

If, however, the user indicates that personalised parameters are required, for example via the key pad interface 5201 of the MMI software element 520, the application layer 52 determines the parameters corresponding to the user-defined characteristic information relating to the call. Thus, the application layer 52, via the MMI software element 520, obtains characteristic information for the call from the user.

In the described exemplary embodiment of the invention, the application layer 52 obtains information relating to some or all of: the urgency of the call (step 604); the duration of the call (step 605); whether the receiver should call back (step 606); whether the call should be connected to voicemail (607); whether fun is being sent (step 608); a description of the fun being sent (step 609); whether a ring tone is to be sent (step 610); whether a picture or an icon is to be sent (step 611); and whether an emotion is being sent (612). The application layer 52 preferably obtains this information by displaying a menu on the display via the a display interface 5202 of the MMI software element 520 and receiving user selections via the key pad interface 5201 of the MMI software element 520.

In response to an indication from the user that the respective characteristic information is to be sent (steps 604-612), the applications layer 52 sets a personalized parameter representing the characteristic information defined by the caller (steps 613-621).

If ring tone or picture/icon characteristic information is to be sent, the applications layer 52 preferably accesses a list of ring tone information or a list of the picture/icon information available to the other party and presents the user with a list from which to choose. Preferably the ring tones and pictures/icons are standardized, such as the ring tones and icons that are standardized in the current 3GPP 23.040 standard, and its evolutions. However, proprietary ring tones or pictures/icons can also be used. Ring tones may be played by the ring tone interface 5203 of the MMI software element 520 or pictures/icons displayed by the display interface 5202 of the MMI software element 520 in order to assist the user select ring tone and/or picture/icon characteristic information.

In a most preferable embodiment of the invention, emotion characteristic information is sent. In this situation, the application layer 52 accesses a list of predefined emotions, such as the pre-defined 3GPP EMS emotions, and presents the user with a list from which to choose. The animations associated with each of the 3GPP emotions may also be displayed to assist the user in selecting an emotion: however, it must be remembered that the animation associated with the pre-defined 3GPP EMS emotions is manufacturer-dependent, and also that in a preferred embodiment of the invention the response of the receiving communication device to an emotion parameter is configured by the user of the receiving device.

In another preferred embodiment of the invention (not shown) the communication device has a counter (2 bit counter in the described arrangement) associated with the communication device phone number lists, namely the phone book and latest called numbers. This counter is incremented/reset by some additional software (not shown in Figures). The counter is incremented up to value 3 in the case of a 2 bit counter at each unsuccessful attempt to initiate a call to a certain number. The counter is reset when an initiated call is successful, or an incoming call is received from that number. Then, when a call is being initiated, the communication device can provide the user with the option of including characteristic information based on the information the communication is tracking.

Multiple characteristic information may be sent in connection with a call, and this is represented by the applications layer 52 determining in step 618 whether or not further characteristic information is to be sent.

Once all characteristic information has been defined by the user, and the corresponding personalized parameters have been determined (step 622-no) by the applications layer 52, the applications layer 52 passes the personalized parameters to the call control layer of the communication device. The call control layer 51 of the communication device sends a message containing the user parameters to the other party in an existing call (step 623-yes and step 624). As indicated previously, the other party may have initiated the existing call originally.

In contrast, once all characteristic information has been defined by the user, and the corresponding personalized parameters have been determined (step 622-no) by the applications layer 52, the applications layer 52 passes the personalized parameters to the call control layer 51 of the communication device. The call control layer 51 of the communication device initiates a call with the selected parameters (step 623-no and step 625).

In both cases, the call control layer 51 of the communication device preferably sends the personalized parameters with another message used in the communication system. For example, in step 621 the parameters are preferably included in a standard call set up message.

As discussed previously, the parameters are associated with a message connected with the call (which may be an existing call, or a proposed call) which message is transferred across the communication system and/or any intervening network or system to the receiving communication device.

In an established call (step 626) which is not terminated (step 627-no) the applications layer 52 determines whether or not the user wishes to send any or further characteristic information (step 628). The applications layer 52 may do this via a menu and the MMI software element 520, for example. If the user does not wish to send characteristic information (step 628-no) the communication device returns to step 626. If, however, the user does wish to send characteristic information (step 628-yes) the communication device returns to determining which characteristic information is to be sent (steps 604-612).

Preferably, the user of a communication device is able to configure the parameters used by the communication device as the user of the communication device desires (not shown). In particular, the user of a communication device in accordance with an embodiment of the invention may program the applications layer 52 of the communication device to always include a certain parameter, or setting of a parameter, in all calls, or in all calls to a particular person, for example. Thus, a person may configure their communication device to always include a parameter indicating "fun" or a parameter indicating a particular icon, for example a "smiley" icon or a parameter to display a particular colour or a parameter to play a particular ring tone. This enables the user to present a consistant "face". Clearly, it is preferable to allow the user to alter these presettings as appropriate on a call by call basis.

In an additional embodiment of the invention (not shown) the communication device is arranged to initiate a pre-configured emergency call to the user's spouse immediately following, for example, the user of the communication device dialing the emergency number. The emergency call would have the urgency parameter pre-set to "emergency" and other parameters could be pre-configured by the user. For example, parameters relating to a particular emergency ring tone and emergency icon may be sent.

The operation of an exemplary communication device in accordance with an embodiment of the present invention in receiving a message, connected with a call, containing personalized parameters representing caller-defined characteristic information will now be described with reference to Figures 7a and 7b. Again, it is assumed that a user field as shown in Figure 3b) is being used to transfer the personalised parameters.

As shown in step 701, first the communication device receives a message connected with a call containing at least one personalized parameter representing caller-defined characteristic information of a call in a user field, step 701. As mentioned previously, this message may be received in connection with an existing call, or may be received in connection with a call to be set up.

The call control layer 51 extracts personalized parameters from the personalized user field from the received message and passes the received personalized parameters to the applications layer 52.

The applications layer 52 determines which of the parameters 30-36 had been received and the information represented by the received parameters, as shown in steps 702-710. Multiple parameters may be received in connection with a call, and this is represented by the applications layer 52 determining whether or not further parameters have been received, in step 711.

The applications layer 52 then determines whether there is a reason not to present the call to the user, step 712.

If the battery of a mobile communication device was running low, the applications layer 52 of the communication device might only allow short or urgent calls from a subset of callers to be presented to the user. Other calls would not be presented to the user. Preferably, the user is able to configure the application layer 52 of the communication device to select the subset of callers and/or to select the parameters on which a 'low battery' rejection of the call is made.

Alternatively, in a call setup situation, the voice mail parameter might indicate that the caller only wishes to leave a message on voice mail. Alternatively, the voice mail parameter might indicate that the caller is happy to leave a message on voice mail and the user of the device may have configured the device to direct all such calls to voice mail, for example because the user is busy and does not wish to be disturbed. In a wireline communication system advantageously an answering machine associated with the receiving communication device might be configured to be connected to the call in response to the status of the voice mail parameter.

In these situations, the applications layer 52 determines that there is a reason not to present the call to the user (step 712-yes). The communication device may return a message containing parameters in reply to the received message (step 713-yes and step 714) if the user has configured the application layer 52 so to do. In this situation, the application layer 52 will generate the appropriate parameters and pass them to the call control layer 51 to be sent to the communication system. Alternatively, the call can be diverted to voicemail (step 713-no and step 715) by the application layer 52 requesting the call control layer 51 to send an appropriate message to the communication system.

Otherwise (step 712-no) the applications layer 52 presents the call to the user via the MMS software element 520, using the received personalized parameter (s) and/or characteristic information, step 716.

In the simplest arrangement, the application layer 52 treats each received parameter as a separate item, and presents each received personalized parameter and/or associated characteristic information to the user by displaying icons or pictures on the display, changing the colour of the display, selecting the ring tones or other alerts, displaying icons, displaying text, adjusting the volume, displaying an emotion animation etc. Thus the application layer 52 via the display interface 5202 of the MMI software element 520 may control the display to display separate icons indicating an short: urgent: fun call from a friend, and may play a particular ring tone via the ring tone interface 5203 of the MMI software element.

The application layer 52 may also present the personalized parameters or characteristic information as a whole to the user, instead of presenting each parameter or characteristic information as a separate item. This may be at least partly dependant on configuration of the application layer 52 by the user.

Preferably, the caller id is taken into account by the application layer 52 in determining presentation of the call to the user, in addition to the personalized parameters and/or the characteristic information. Thus, the application layer 52 might be configured such that ring tone or picture parameters are ignored unless received from selected people, ie close family and/or friends.

Most preferably, the application layer 52 can be configured by the user such that the response of the communication device to receipt of a particular parameter, possibly in conjunction with a selected caller id, is chosen by the user. Thus, the means used to represent each received parameter is preferably selectable by the user. Thus, for example, the user may choose a particular icon or ringtone or display colour or keypad backlight etc or combination thereof to represent a particular parameter or value of a particular parameter.

Preferably, on receipt of an emotion parameter the communication device will present the call to the user using one or more of a melody/ring-tone, change in volume/flashing lights, picture/icons, display colour, keypad backlight, vibration etc in addition to or instead of any emotion animation associated with the emotion represented by the parameter. Thus an emotion can be conveyed by the complete response of the communication device to the incoming emotion parameter, and not just by an animation displayed on the screen. As indicated previously, preferably the emotion parameter may represent at least the emotions defined for 3GPP EMS.

Most preferably, the presentation of a received emotion parameter by the communication device can be configured by the user of the communication device. This may be arranged to be also dependent on caller id.

Thus it can be seen that the present invention enables an originating user to send characteristic information relating to the call to a receiving user, such that the presentation of the call by the communication device of the receiving user depends at least in part on the personalized characteristic information specific to that call sent from the communication device of the originating user. However, in preferable embodiments of the invention, the presentation of the call by the communication device of the receiving user also depends upon the configuration of the receiving communication device.

The value of the "attempts" parameter indicated above may affect the presentation of the call, for example the ring-tone volume or other alert magnitude may increase as the number of previous unsuccessful attempts to initiate the call, as indicated by the attempts parameter, increases. Of course, other alterations in the presentation of the call depending on the attempts parameter value are possible, and preferable can be configured by the receiving communication device user.

It is of course possible that the communication system could add such a parameter to a call initiation request message sent from a communication device without an attempts parameter capability. This allows the receiving communication device supporting this feature to provide additional information about the call during presentation of the call despite the calling communication device not supporting the feature.

On receipt of an emergency call, as outlined above, will trigger a maximum alert, for example, the ring tone will be at maximum volume, colours and lights will be activated, any ongoing activity will be suspended.

As indicated above, the invention is applicable to the situation where the personalized parameters are sent at the beginning of a call, and also to the situation where the parameters are sent during or at the end of a call. Clearly some parameters, such as those relating to urgency, duration or call handling as examples, are more suitable during call set up where the information about the call can be displayed to a user prior to the call being answered, to assist the user in choosing whether to answer or not. Other parameters, such as pictures/icons or the ring-tone melodies can clearly be used for presentation of the call to the user at any time during or at the end of a call.

Once the call has been presented, step 716, and has been accepted if the message is a call set up request, the call is established or ongoing, step 717. The applications layer determines whether the user wishes to send parameters to the other party in the call, step 718. If the user wishes to send parameters (step 718-yes), the procedure outlined in Figure 6 is followed (step 719). Otherwise (step 718-no) the application layer 52 determines whether another message containing parameters has been received by determining whether more parameters are passed to the application layer 52 from the call control layer 51.

If a message is received (step 720-yes), the applications layer returns to steps 702-710 to determine the received parameters. If not, the application layer 52 determines whether it is the end of the call (step 721-yes). If not (step 721-no) the applications layer returns to the call established or ongoing stage, step 717

In a GSM/GPRS/UMTS communication system, the call set up procedure is described in the 3GPP specification 24.008. In the first step, a SETUP message is sent from a calling selective call receiver via the communication systemto a calledselective call receiver (eg a mobile telephone). In accordance with a preferred embodiment of the invention, the SETUP message contains the personalized parameters. The called selective call receiver call control layer sends a "CALL CONFIRMED" signal back to the calling selective call receiver via the communication system and passes the personalized parameters (or the user field information) to the application layer.

The application layer determines which parameters have been received and uses this information to determine presentation of the incoming call. So for example, a particular ring tone may be used & a "short call" icon may be displayed, as defined by the received parameters, to present the incoming call to the user. Once the selective call receiver is ringing (ie presenting the call to the user) the call control layer of the called selective call receiver sends an "ALERTING" message back to the calling selective call receiver via the communication system.

When the incoming call is presented to the user of the called selective call receiver, the user may decide to accept the call as the ring-tone is associated with the calling user by the called user, and the displayed icon indicates that the call will be only short. The called user is happy to accept a short call from that person, and so accepts the call, for example by pressing a button on the selective call receiver or by opening a flip form factor selective call receiver having an external display.

The acceptance of the call is detected by the applications layer via the MMI software element 520, and the acceptance is then passed to the call control layer. The call control layer sends a "CONNECT" message to the calling selective call receiver via the communication system, and the calling selective call receiver responds with a "CONNECT ACK" message to establish the call.

Clearly, the present invention is applicable both to a circuit switched communication system and to a packet switched communication system.

The present invention may be implemented in a number of different ways, as will be apparent to a skilled person, and the invention is intended to be limited only by the accompanying claims.

## Claims

1. A communication device adapted to enable a user of the communication device to determine characteristic information of a call and to send a message connected with the call containing at least one personalized parameter representing said characteristic information of the call.

2. A communication device adapted to read at least one personalized parameter representing caller-determined characteristic information of a call from a message received in connection with the call and to use the personalised parameter or the characteristic information in determining presentation of the call to the user.

3. The communication device as claimed in claim 2 adapted to enable the user of the communication device to configure the presentation of the call by the communication device to receipt of a message containing at least one personalized parameter.

4. The communication device as claimed in claim 2 or 3 wherein the caller id is also used in determining presentation of the call to the user.

5. The communication device as claimed in one of claims 2-4 wherein the power or battery status of the communication device is also used in determining presentation of the call to the user.

6. The communication device as claimed in one of claims 2-5 wherein the at least one personalised parameter or the characteristic information is used to determine whether to present the call to the user.

7. The communication device as claimed in one of claims 2-6 wherein the at least one personalised parameter or the characteristic information is used to determine how the call is presented to the user.

8. The communication device as claimed in claim 7 wherein the call is presented to the user by way of one or more of a melody/ring-tone, change in volume/flashing lights, picture/icons, display colour, keypad backlight, vibration.

9. The communication device as claimed in any preceding claim wherein the message connected with the call is a call initiation request message.

10. The communication device as claimed in claim 9 for operation in a GSM/EDGE/UMTS wireless communication system wherein at least one personalized parameter is included in a SETUP message.

11. The communication device as claimed in any preceding claim wherein the message relating to the call contains a personalised parameter relating to the urgency of the call

12. The communication device as claimed in any preceding claim wherein the message relating to the call contains a personalised parameter relating to the expected duration of the call.

13. The communication device as claimed in any preceding claim wherein the message relating to the call contains a personalized parameter relating to whether the caller wishes the called party to call back.

14. The communication device as claimed in any preceding claim wherein the message relating to the call contains a personalized parameter relating to the use of voice mail for the call.

15. The communication device as claimed in any preceding claim wherein the message relating to the call contains a personalised parameter relating to an indication of fun.

16. The communication device as claimed in any preceding claim wherein the message relating to the call contains a personalized parameter relating to a ringtone.

17. The communication device as claimed in any preceding claim wherein the message relating to the call contains a personalized parameter relating to an icon or a picture.

18. The communication device as claimed in any preceding claim wherein the message relating to the call contains a personalized parameter relating to the number of times the calling communication device has tried unsuccessfully to initiate the call.

19. The communication device as claimed in any preceding claim wherein the message relating to the call contains a personalized parameter relating to an emotion.

20. The communication device as claimed in claim 19 wherein the message relating to the call contains a personalized parameter relating to an emotion selected from at least the emotions shown in Figure 8.

21. The communication device as claimed in claim 19 or 20 wherein the call is presented to the user by way of one or more of a melody/ring-tone, change in volume/flashing lights, picture/icons, display colour, keypad backlight, vibration in addition to or instead of an emotion animation defined for the emotion represented by the received emotion parameter.

22. The communication device as claimed in claim 21 wherein the presentation of the call in response to the receipt of an emotion parameter can be configured by the user of the receiving communication device.

23. The communication device as claimed in any preceding claim wherein the at least one personalised parameter is contained within a user-user parameter field of the message connected with the call.

24. The communication device as claimed in any preceding claim being a selective call receiver in a wireless communication system.

25. A communication system apparatus adapted to read at least one personalised parameter representing caller-determined characteristic information of call from a message connected with the call that is processed by the communication system apparatus and to use the personalised parameter or the characteristic information to determine billing of the call.

26. A communication system comprising a communication network and at least a first and a second communication device in which at least one personalized parameter representing caller-determined characteristic information of a call is generated in the first communication device, is passed to and transmitted through the communication network, and passed to the second communication device.
